# EUROPEAN PATENT APPLICATION

(11) **EP 4 080 266 A1**
(43) Date of publication of application: **26.10.2022**
(21) Application number: 21170248.5
(22) Date of filing: 23.04.2021
(51) Int. Cl.: G02B 21/28, H05K 7/20

(54) **COMPONENT HOUSING FOR A LABORATORY IMAGING APPARATUS**

(71) Applicant: Leica Microsystems CMS GmbH, 35578 Wetzlar (DE)
(72) Inventor: Kubek, Martin, 35759 Driedorf (DE)
(74) Representative: Schaumburg und Partner Patentanwälte mbB

(57) **Abstract**

A component housing (100) for an external laboratory imaging apparatus, comprises a plurality of structural members (102, 104, 106, 108, 110, 112) forming a housing structure, which is configured to accommodate at least one heat generating component (118, 120), which is connectable to the external laboratory imaging apparatus. At least one of the structural members (102, 104, 106, 108, 110, 112) is configured as a heat dissipating member (114, 116) on which the heat generating component (118, 120) is arranged.

## Description

### Technical field

The invention relates to a component housing for a laboratory imaging apparatus. Further, the invention relates to a laboratory system comprising the component housing and an external laboratory imaging apparatus.

### Background

Components of laboratory apparatuses regularly require cooling. These components may be common parts such as power supply units, controller units or processing units. In addition, they may be more specialised parts such as highly sensitive detectors or cameras. Commonly cooling is achieved by dedicated heat sinks, such as fins, connected to the component, which are each cooled by dedicated fans, which actively generate an air flow through the respective heat sink. For components with higher heat output water cooling systems may be used. These remove heat from the component that needs to be cooled by a heat exchanger and water as a coolant. The heat then has to be removed from the coolant itself by a further heat exchanger, usually in combination with forced air cooling.

Disadvantages of current cooling means include the use of complex equipment such as heat exchanger and heat sinks. These need to be maintained and serviced at regular intervals to ensure continued performance. In addition, liquid coolants need to be topped-up and often pose a risk in case of leakage. Further, the use of fans is required in combination with baffles to force an air flow through dedicated heat sinks. In any case, the cooling capacity is usually the primary and only concern.

### Summary

It is an object to provide a component housing for an external laboratory imaging apparatus that enables efficient cooling with a particularly simple and efficient construction.

The aforementioned object is achieved by the subject-matter of the independent claims. Advantageous embodiments are defined in the dependent claims and the following description.

A component housing for an external laboratory imaging apparatus, comprises a plurality of structural members forming a housing structure, which is configured to accommodate at least one heat generating component, which is connectable to the external laboratory imaging apparatus. At least one of the structural members is configured as a heat dissipating member on which the heat generating component is arranged. This enables particularly efficient cooling of the heat generating component by increasing the surface area available for cooling by using structural members of the component housing as a surface for heat transfer. The large surface area of the heat dissipating member makes forced convection, for example by means of a fan, unnecessary. Further, the use of structural members of the component housing enables particularly simple and efficient construction of the component housing. Examples of laboratory imaging apparatuses are microscopes, spectrometers and image analysis systems.

In particular, the housing structure is a box-like structure with at least two of the structural members forming opposing box walls, and wherein the heat dissipating member extends between the opposing box walls. This maximises the surface area available for cooling within the component housing. In particular, the box walls are side walls of the housing.

Preferably, the component housing comprises at least one blower configured to create an air flow along at least one surface portion of the heat dissipating member. This enables increased and efficient heat transfer from the heat dissipating member to the air by forced convection.

Preferably, the blower is arranged within the housing structure to create the air flow along a dimension of the housing structure, which is shorter than other dimensions of the housing structure. This enables fast removal of heat from the heat dissipating member to the outside of the housing.

In particular, the housing comprises at least one air intake and at least one air outlet, wherein the blower is arranged within the housing structure to create the air flow from the air intake to the air outlet. This enables particularly efficient heat transfer from the heat dissipating member to the air.

Preferably, the at least one blower is configured to be operated at a sound pressure in a range from 30 db(A) to 40 db(A), particularly at 36 db(A). This enables particularly quiet operation of the component housing. Particularly, this enables operation below a concentration threshold at 40 db(A) (cf. p. 9 in *Erfassung der täglichen Lärmexposition und die Korrelation zum individuellen Gesundheitsstatus,* Bayerisches Landesamt für Gesundheit und Lebensmittelsicherheit) above which level noise has a negative impact on the ability to concentrate. Especially in a scientific working environment the ability to perform complex tasks is critically important. Excessive noise emission can drastically reduce this ability.

In particular, at least one blower is configured to create the air flow at a volumetric flow rate in a range from 100 to 200 m³/h, in particular, 178 m³/h. This enables a particularly quiet operation of the component housing.

Preferably, the heat dissipating member is made of a heat conductive material. This enables particularly efficient cooling of the heat generating component.

Particularly preferable, the heat dissipating member is made of aluminium. This enables particularly simple construction of the component housing. Alternatively, the heat dissipating member is made of steel or brass, for example.

Preferably, the heat dissipating member is provided as a support plate having a mounting surface, on which the heat generating component is mounted. This enables a particularly simple construction of the component housing.

In a particularly preferred embodiment, the support plate has a high surface-area-to-volume ratio in a range from 0.5 to 1. This enables highly efficient cooling of the support plate.

Preferably, the surface area of the mounting surface of the heat dissipating member, which is covered by the heat generating component is in a range from 5 % to 30 %, in particular in a range from 10 % to 25 %, of the total surface area of the heat dissipating member. This enables a particularly large surface area of the heat dissipating component available for heat transfer to the surrounding air and therefore efficient cooling.

In particular, the component housing comprises a plurality of modules, each module including one heat dissipating member, with at least one heat generating component arranged on the heat dissipating member, and one blower creating the air flow along the respective heat dissipating member. This enables particularly simple construction of the component housing.

Preferably, the modules are stacked on top of each other within the housing structure. This allows to construct the component housing in a particularly compact manner.

Preferably, the heat generating component comprises at least one of a power supply, a light source, a detector, a camera, a controller, a graphic card, and a memory. This enables a particularly versatile use of the component housing.

In a particular embodiment, the component housing comprises no additional heat sink elements or baffles. This enables a particularly simple construction of the housing and efficient air flow through the housing.

In a particularly preferred embodiment, the blowers are not arranged inside the component housing. This enables a particularly simple and efficient construction of the housing.

According to a further aspect a laboratory system is provided, comprising the component housing and an external laboratory imaging apparatus, in particular a microscope.

### Short Description of the Figures

Hereinafter, specific embodiments are described referring to the drawings, wherein:
- Fig. 1: is a schematic side view of a component housing from a first side,
- Fig. 2: is a schematic side view of the component housing from a second side, and
- Fig. 3: is a schematic top view of the component housing.

### Detailed Description

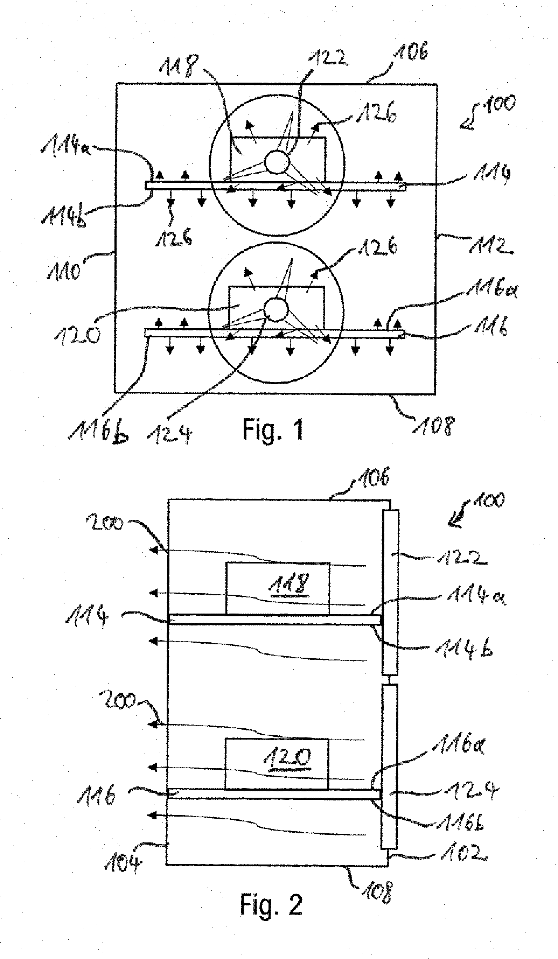

Figure 1 shows a schematic side view of a component housing 100 from a first side. The component housing comprises structural members, which form a housing structure in a box-like shape. The structural members include two opposing side walls 102, 104, a top wall 106, a bottom wall 108, and two further opposing side walls 110, 112 perpendicular to the side walls 102, 104. In addition, the structural members further include a first heat dissipating member 114 and a second heat dissipating member 116. Alternatively, more or less heat dissipating members may be provided.

The component housing houses a first heat generating component 118 and a second heat generating component 120. The first heat generating component 118 and the second heat generating component 120 are situated on the first heat dissipating member 114 and the second heat dissipating member 116, respectively. Alternatively, there may be more than one heat generating component 118, 120 on any of the heat dissipating members 114, 116.

The heat generating components 118, 120 are components of an external laboratory imaging apparatus. The apparatus being, for example, a microscope, a spectrometer, or an image analysis system. Such heat generating components 118, 120 may include, for example, power supply units, light sources, imaging detectors, camera, controllers, graphic cards, and memory units. The heat generating components 118, 120 are configured to be connectable to the laboratory imaging apparatus.

The components 118, 120 in the housing 100 generate heat, usually when in use and connected to the laboratory imaging apparatus. The components 118, 120 are thermally connected to the respective heat dissipating member 114, 116. Thus, heat generated by the components 118, 120 is transferred to the respective heat dissipating member 114, 116 by conduction. This increases the surface area available for convective heat transfer, or cooling of the components 118, 120 and the members 114, 116. The heat given off by the components 118, 120 and the members 114, 116 is indicated by the reference sign 126. In particular, the members 114, 116 have a high surface-area-to-volume ratio in the range of 0,5 to 1. The high surface-to-volume ratio enables the efficient cooling of the heat dissipating member 114, 116 and therefore the components 118, 120.

In addition, the proportion of the surface area of the members 114, 116, which is covered by the heat generating component 118, 120 is in a range between 5 % and 30 %, in particular between 10 % and 25%.

The members 114, 116 are made of a heat conductive material, for example, aluminium. Alternatively, the members 114, 116 may be made of brass or steel, for example. Further, the members 114, 116 are integral parts of the component housing 100. This means, that they are essential to the structural integrity of the housing 100. Members 114, 116 are fixedly connected to at least two side walls 102, 104. The use of structural members of the housing 100 as heat dissipating members 114, 116 allows the housing 100 to be constructed in a particularly easy and efficient way. In addition, this allows the housing to be constructed without any additional heat sinks, such as fins. Further, as structural members, the members 114, 116 are configured to carry the load of the heat generating components 118, 120.

Additionally, the component housing 100 comprises a first blower 122 and a second blower 124. The blowers 122, 124 are arranged in air inlet openings of the side wall 102 and are configured to generate an air flow through the housing 100. The blowers 122, 124 and the heat dissipating members 114, 116 are arranged in the housing 100, such that each blower 122, 124 is paired with a heat dissipating member 114, 116. In particular, the blowers 122, 124 generate an air flow along the upper surfaces 114a, 116a, on which the components 118, 120 are mounted, and lower surfaces 114b, 116b of the respective heat dissipating member 114, 116. In addition, the air flow is circulating around the heat generating components 118, 120. Alternatively, the air flow is generated only along the upper surfaces 114a, 116a or the lower surfaces 114b, 116b.

Figure 2 shows a schematic side view of the component housing 100 from a second side. The air flow generated by the blowers 122, 124 exits the housing 100 through air outlet openings in the side wall 104. Reference sign 200 indicates the air flow through the housing 100 generated by the blowers 122, 124. The air flow through the housing 100 generated by the blowers 122, 124 is substantially laminar. The housing 100 comprises no air guiding elements such as baffles or channels. That means the air flow between the air inlet and the air outlet is essentially unhindered. However, air flow around the heat generating components 118, 120 can be turbulent, in particular at edges of the heat generating components 118, 120. The blowers 122, 124 each have a cross section in a range between 100 cm² and 150 cm², in particular of 135 cm². The maximum volumetric flow generated by each of the blowers 122, 124 is in a range between 100 m³/h and 200 m³/h, in particular at 178 m³/h.

The use of structural parts of the component housing 100 as heat dissipating members 114, 116 enables particularly large surface areas for cooling in the form of the members 114, 116. This increases the available surface area for cooling compared to the surface area of the heat generating components 118, 120. At the same time further air guiding elements or heat sinks are not necessary. This optimises the air flow in the housing 100 along the members 114, 116.

Alternatively, the blowers 122, 124 may be configured to extract air from the housing 100.

In a further alternative, the housing 100 comprises no blower and heat transfer is achieved only by natural convection.

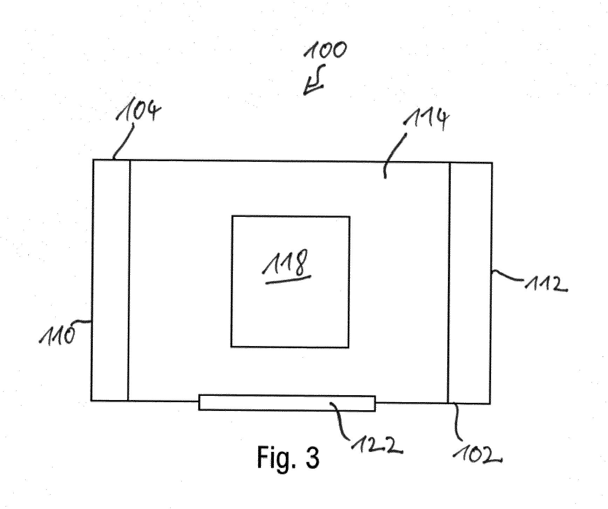

Figure 3 shows a schematic top view of the component housing 100. The air inlet openings and the air outlet openings are arranged on opposing side walls 102, 104, respectively. In particular, the air inlet openings and air outlet openings are arranged on those opposing side walls, which are closest to each other. This reduces the distance between air inlet openings and air outlet openings to the dimension along which the housing 100 is shortest.

The reduced distance between air inlet openings and air outlet openings and the unhindered air flow along the surfaces 114a, 114b, 116a, 116b of the heat dissipating element 114, 116 enables the efficient removal of heat by the air flow generated by the blowers 122, 124. In addition, as discussed above, the large surface area to volume ratio of the heat dissipating members 114, 116 increases the surface area available for cooling of the heat generating component 118, 120. With no additional air guiding elements or heat sinks hindering the air flow between the air inlet and the air outlet, the air flow is particularly efficient. Overall, this enables particularly quiet operation of the blowers 122, 124 at sound pressures in the range of 30 dB(A) to 40 dB(A), in particular at 36 dB(A).

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: Component housing
- 102, 104, 110, 112: Side wall
- 106: Top wall
- 108: Bottom wall
- 114, 116: Heat dissipating member
- 114a, 116a: Upper surface of heat dissipating member
- 114b, 116b: Lower surface of heat dissipating member
- 118, 120: Heat generating component
- 122, 124: Blower
- 126: Heat
- 200: Airflow

## Claims

1. A component housing (100) for an external laboratory imaging apparatus, comprising a plurality of structural members (102, 104, 106, 108, 110, 112) forming a housing structure, which is configured to accommodate at least one heat generating component (118, 120), which is connectable to the external laboratory imaging apparatus, wherein at least one of the structural members (102, 104, 106, 108, 110, 112) is configured as a heat dissipating member (114, 116) on which the heat generating component (118, 120) is arranged.

2. The component housing (100) according to claim 1, wherein the housing structure is a box-like structure with at least two of the structural members (102, 104, 106, 108, 110, 112) forming opposing box walls (102, 104), and
wherein the heat dissipating member (114, 116) extends between the opposing box walls (102, 104).

3. The component housing (100) according to one of the preceding claims, comprising at least one blower (122, 124) configured to create an air flow (200) along at least one surface (114a, 114b, 116a, 116b) portion of the heat dissipating member (114, 116).

4. The component housing (100) according to claim 3, wherein the blower (122, 124) is arranged within the housing structure to create the air flow (200) along a dimension of the housing structure, which is shorter than other dimensions of the housing structure.

5. The component housing according to claim 3 or 4, comprising at least one air intake and at least one air outlet, wherein the blower (122, 124) is arranged within the housing structure to create the air flow (200) from the air intake to the air outlet.

6. The component housing (100) according to one of the claims 3 to 5, wherein the at least one blower (122, 124) is configured to be operated at a sound pressure in a range from 30 db(A) to 40 db(A).

7. The component housing (100) according to claim 3 to 6, wherein at least one blower (122, 124) is configured to create the air flow (200) at a volumetric flow rate in a range from 100 to 200 m³/h.

8. The component housing (100) according to one of the preceding claims, wherein the heat dissipating member (114, 116) is made of a heat conductive material.

9. The component housing (100) according to one of the preceding claims, wherein the heat dissipating member (114, 116) is made of aluminium.

10. The component housing (100) according to one of the preceding claims, wherein the heat dissipating member (114, 116) is provided as a support plate having a mounting surface (114a, 116a), on which the heat generating component (118, 120) is mounted.

11. The component housing according to claim 10, wherein the support plate has a high surface-to-volume ratio in a range from 0.5 to 1.

12. The component housing according to claim 10 or 11, wherein the surface area of the mounting surface (114a, 116a) of the heat dissipating member (114, 116), which is covered by the heat generating component (118, 120) is in a range from 5 % to 30 % of the total surface area of the heat dissipating member (114, 116).

13. The component housing (100) according to one of the preceding claims 3 to 12, comprising a plurality of modules, each module including one heat dissipating member (114, 116), with at least one heat generating component (118, 120) arranged on the heat dissipating member (114, 116), and one blower (122, 124) creating the air flow (200) along the respective heat dissipating member (114, 116).

14. The component housing (100) according to claim 13, wherein the modules are stacked on top of each other within the housing structure.

15. The component housing (100) according to one of the preceding claims, wherein the heat generating component (118, 120) comprises at least one of a power supply, a light source, a detector, a camera, a controller, a graphic card, and a memory.

16. A laboratory system, comprising a component housing (100) according to one of the preceding claims and an external laboratory imaging apparatus.
